# EUROPEAN PATENT APPLICATION

(11) **EP 1 816 756 A1**
(43) Date of publication of application: **08.08.2007**
(21) Application number: 06002166.4
(22) Date of filing: 02.02.2006
(51) Int. Cl.: H04B 7/005

(54) **Method for transmitting power control information in a radio communications system**

(71) Applicant: SIEMENS AKTIENGESELLSCHAFT, 80333 München (DE)
(72) Inventor: Dötting, Martin, Dr., 85579 Neubiberg (DE); Hindelang, Thomas, 82256 Fürstenfeldbruck (DE); Klein, Axel, 81737 München (DE); Viering, Ingo, Dr., 81539 München (DE)

(57) **Abstract**

According to the invention, a method for transmitting power control information between at least one base station and at least one user equipment of a radio communications system is used. The invention is characterized in that prior to transmitting the power control information the base station jointly encodes a group of power control information commands whereby each power control information command is separately related to a user equipment. There are further apparatus comprising means for performing this method.

## Description

The invention is related to a method for transmitting power control information between at least one base station and at least one user equipment of a radio communications system. Power control information comprises in particular at least one power control (information) command.

The present invention is particularly used within a radio communications network.

The Fractional Dedicated Physical Channel (F-DPCH) has been introduced to minimize the code occupancy (and the generated interference) in the downlink (DL) of WCDMA (Wideband Code Division Multiple Access). The F-DPCH carries only the power control command (TPC), any higher layer signaling is mapped to the HS-PDSCH (High Speed Physical Downlink Shared Channel). Thereby, the TPC bit remains the only dedicated (i.e. power controlled) downlink (DL) signaling.

In some phases of uplink inactivity, the TPC command for the Downlink carried on the Uplink (UL) DPCCH (Dedicated Physical Control Channel) might be very unreliable or even not present at all. This would break the closed power control loop of the downlink. As a consequence, the F-DPCH is also not able to control the User Equipment's (UE) power, which makes it very difficult to bring such a "sleeping" UE back to live.

Furthermore, it seems suboptimal to drag along the overhead of a closed loop power control, if it is just applied to the transmission of a single bit.

It has already been proposed to transmit the F-DPCH at a fixed power, which is sufficient to receive the TPC bit anywhere in the cell area (i.e. broadcast power). This would make the uplink power control more reliable, since the commands can be received in any situation, even if the DL power control is not settled. Even if the UL power control is not settled (i.e. after inactivity), the F-DPCH can quickly and reliably restore the steady-state.

However, this obviously consumes more power thereby producing more interference. It is well-known from communications theory, that the transmission of a single bit is highly inefficient, since no coding gain can be achieved (just repetition code).

Therefore changing the F-DPCH from being power controlled to using fixed power will harm the system performance.

It is therefore an object of the present invention to provide a method for efficiently transmitting power control information among communications network components (e.g. base station and UE).

The object of the invention particularly appears between the base station and the UE on a channel that is itself not power-controlled.

This object is solved by the features of independent claim 1. Further advantageous embodiments of the invention are disclosed in further dependent claims. There are.further independent claims related to at least one apparatus comprising means suitable for performing the above mentioned method. Embodiments of the method could be also applied for the apparatus.

An aspect of the invention is a method for transmitting power control information between at least one base station and at least one user equipment of a radio communications system, characterized in that prior to transmitting the power control information the base station jointly encodes a group of power control information commands whereby each power control information command is separately related to a user equipment.

A further aspect of the invention is a radio communications system comprising at least one user equipment and at least one base station with means for performing the method.

A further aspect of the invention is an apparatus, in particular a radio base station, of a radio communications system, comprising means for transmitting power control information characterized in comprising means for encoding a group of power control information commands whereby each power control information command is separately related to a user equipment.

A further aspect of the invention is an apparatus, in particular a user equipment, of a radio communications system, comprising means for transmitting power control information characterized in comprising means for decoding a group of power control information commands related to multiple user equipments.

Preferred embodiments of the present invention will now be described with reference to the accompanying drawing in which:
Fig 1 depicts a F-DPCH slot structure,
Fig 2 depicts a current F-DPCH Timing,
Fig 3 shows a principle idea of Joint F-DPCH coding.

In principle, it is proposed to jointly decode the TPC bits of multiple users, and therefore to generate a coding gain.

### Principle Aspect of the invention

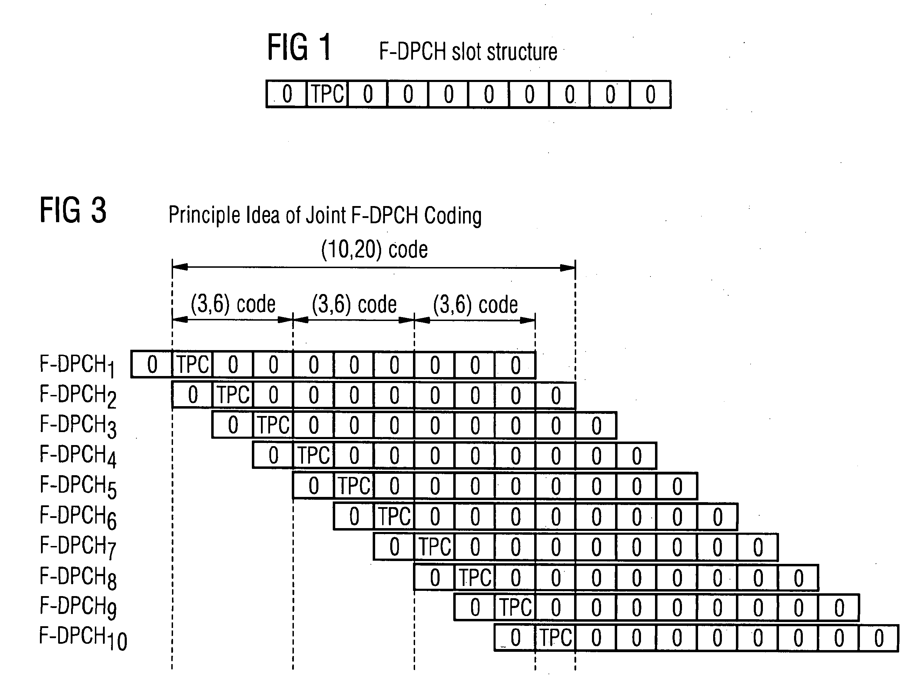

First of all, a principle aspect of the F-DPCH will be now described. Actually, the F-DPCH is just a special frame structure which is depicted in Figure 1.

It uses SF=256 giving us 10 QPSK symbols per slot, corresponding to 20 bits. The second symbol contains the TPC bits, all the others are zero, i.e. will not be transmitted. This gives the RNC (radio network controller) the possibility to assign the same channelization code to multiple users by assigning them different time offsets. The UE's can identify their own TPC bits by the timing relation.

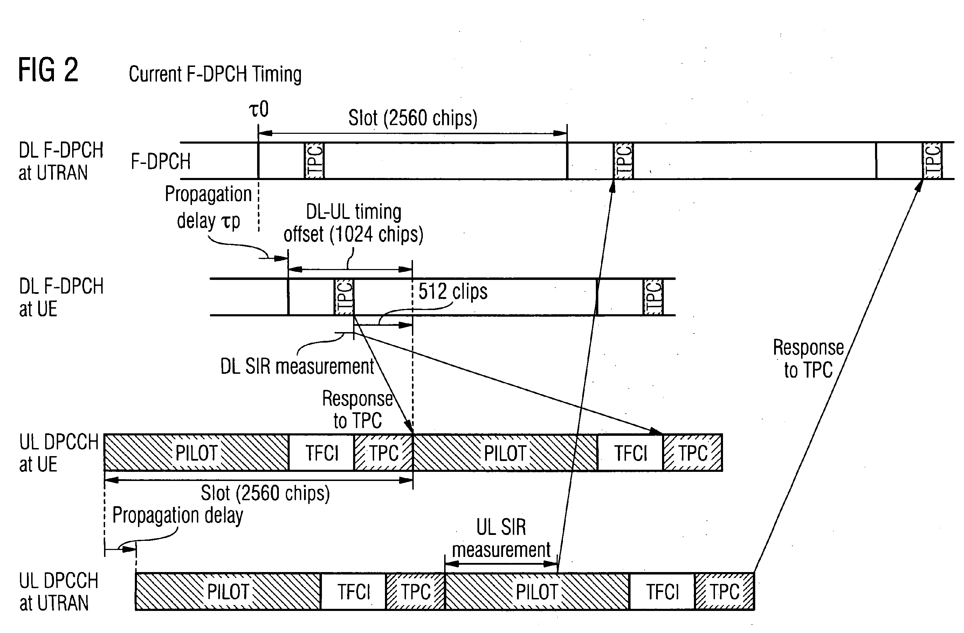

The current timing behavior is given in Figure 2.

The UE transmits its DPCCH (and other channels as well) 512 chips (i.e. 2 symbols) after receiving the TPC bits on the F-DPCH. This offset has 2 reasons:
- it typically gives the UE enough time to detect the command and apply it to the following DPCCH slot
- it is short enough so that the NodeB (radio base station) receives its command in time to apply it to the following F-DPCH slot. (concerns downlink power control)
- it is also short enough to give the UE the chance to apply the received command in the next slot without additional delay.

Figure 3 depicts the principle idea. Instead of treating each TPC command separately for several users, the NodeB jointly encodes a group of commands.

For example, the NodeB can group 3 users together and apply a (6,3) Reed Muller code to the 3 commands (up/down). This yields 6 coded bits which are transmitted via the QPSK-modulated TPC symbols on the 3 F-DPCH's.
In a similar way it is also possible to group the TPC symbols of up to 10 users, which is the maximum number of users sharing the same channelization code for F-DPCH.

The UE would need to dispread and detect several symbols (e.g. 3 or 10 instead of a single one) and decodes the resulting codeword. After that, it has to extract its own command. This could be done exploiting a similar timing relation as already given, i.e. signaling does not have to be changed.

Note that larger code groups (e.g. 10 instead of 3 users) achieve a higher coding gain, but suffer more from the decoding delay problem described below.

In principle, one could also use the additional flexibility to code more than 1 information bit TPC per user (i.e. not just an "up" or "down" command, but e.g. also an explicit "hold" or a "fast down" command).

### Delay

A disadvantage of this proposal is, that the UE has to wait until the TPC symbol of the last F-DPCH in the group is received. For this last user, there is no difference (except some complexity). But the problem becomes larger for users with their TPC symbols assigned towards the beginning of the code word.

Currently the 2^{nd} last user already cannot preserve the 512 chip offset.

Furthermore the F-DPCH is no longer power controlled anyway, so that one of the requirements for this short 512 chip offset is obsolete (see above).
Furthermore, the timing relation is so tight, that some users will suffer from more than 1 slot Power Control delay (as depicted in Figure 2) anyway. In this case, there is some margin in the UE offset.
Finally, although an additional Power Control delay of 1 slot definitely harms fast users, slow users will probably not suffer at all.

Hence, it is proposed to relax the timing relation of 512 chips to a larger value.

### Ordering with respect to velocity

It is shown the obvious trade-off between coding gain and delay. I.e. users in particular in the front part of the codeword might suffer from additional delay. This becomes worse, the longer the codeword is. But the gain is larger the longer the codeword is. Note that the last user (as well as other users close to the end of the codeword) does not have this problem.
So it is also advantageous to sort the users such that slow users have their TPC symbols assigned at the beginning (delay problem, but does not harm), and fast users at the end (no delay problem depending on the timing offset) of the codeword. In this case, the RNC should have enough information to establish such an arrangement without additional complexity.

### Code Shortage Problem

The proposed method can also be used to put even more than 10 users on a single channelization code. For instance, in Figure 3 it looks like the code rate is fixed to ½. By using e.g. a (20,15) code, the RNC could assign 15 users the same channelization code (instead of 10) using rate code ¾. In this case the timing signaling needs to be extended, since only 10 offsets are defined.

### Further Improvements

If a single channelization code is not used by 10 users, further gain can be achieved by the same coding. For instance, if only 3 users are mapped on a channelization code, a (20,3) code can be applied. This yields a gain that would not be possible without such a coding (a new slot format would be needed). An advantage in this case is that the broadcast power of F-DPCH can be reduced, which is advantageous in case of few high-rate and/or distant users to be served in the downlink.

The DL TPC command on the UL DPCCH is now obsolete, since there is no DL power control any longer. The following proposals can be applied independently if or if not the aforementioned joint F-DPCH coding is applied. These unused bits could either be omitted, or it could be used in another way, e.g. by introducing a new (TPC-less) slot format.

In some current implementations the DL TPC commands on the UL DPCCH are used to interpolate the CQI (Channel Quality Indication) reports in HSDPA (High Speed Downlink Packet Access). This would no longer be possible. On the other hand, if the UE is aware of this CQI interpolation procedure (and the applied algorithm) and the TPC bit(s) is only used for CQI interpolation, it might proactively use the TPC bit as a relative CQI report. This means that the regular absolute CQI feedback rate can be reduced and UL terminal power and interference can be reduced. This would require a standardization of the interpolation procedure and signaling that this interpolation is used by the Node B. In this way the frequency of the channel state information can be reduced.

Another possibility is that the TPC bit(s) could be replaced by additional training symbols ("pilots") to improve the UL channel estimation.

In the following the advantages of the present invention are described:
- The efficiency of a fixed power F-DPCH is much higher, i.e. the F-DPCH consumes less power and produces less interference
- The UL power control is much more reliable (also when settling after inactivity)
- The near/far problem is significantly mitigated
- The number of users on a single channelization code can be adapted to the number of active users. In particular more than 10 users can be served on one channelization code, but also when fewer users are used, coding gain can be exploited and broadcast transmit power saved.
- Due to decoding also of the TPC commands of the other users, each UE gets additional information about the cell
- The TPC bit on the UL-DPCCH might be saved making the UL more efficient as well
- With a smart design described above, joint coding does not lead to delay problems for the power control.

## Claims

1. A method for transmitting power control information between at least one base station and at least one user equipment of a radio communications system, **characterized in that** prior to transmitting the power control information the base station jointly encodes a group of power control information commands whereby each power control information command is separately related to a user equipment.

2. A method according to claim 1, **characterized in that** a group of power control information commands related to multiple user equipments are time-multiplexed on a channelization code.

3. A method according to any preceding claim, **characterized in that** the method is applied for a F-DPCH.

4. A method according to any preceding claim, **characterized in that** Reed Muller code is applied for encoding the power control information commands.

5. A method according to any preceding claim, **characterized in that** at said user equipment a timing offset between receiving transmitted power control information and transmitting power control information is increased to enable longer codewords without increasing the delay.

6. A method according to any preceding claim, **characterized in that** for encoding the commands of slowly moving user equipments are set at the beginning of the from encoding resulted codeword and the commands of fast moving user equipments are set at the end of said codeword.

7. A method according to any preceding claim, **characterized in that** for encoding the power control information commands the Coderate is 1/2.

8. A method according to any of the claims 1 to 6, **characterized in that** the Coderate is smaller than 1/2, if the channelization code is not completely used.

9. A method according to any of the claims 1 to 6, **characterized in that** the Coderate is larger than 1/2, wherein the number of the user equipment per channelization code is larger than the number of the power control information commands per channelization code.

10. A method according to any preceding claim, **characterized in that** an addition signaling is introduced which enables said user equipment to identify its power control information command.

11. A method according to any preceding claim **characterized in that** the power control information command which controls the transmission from said base station to said user equipment, so-called downlink, and which is related to the transmission from said user equipment to said base station, so-called uplink, is removed.

12. A method according to any preceding claim **characterized in that** said power control information command according to claim 11 is replaced by additional training symbols to improve estimation of transmission.

13. A method according to any of the preceding claims 1 to 11, **characterized in that** said user equipment uses said power control information commands according to claim 11 in such way that said base station can interpolate channel state information reported by the user equipment.

14. A radio communications system comprising at least one user equipment and at least one base station with means for performing the method according to any of the preceding claims.

15. An apparatus of a radio communications system, comprising means for transmitting power control information **characterized in** comprising means for encoding a group of power control information commands whereby each power control information command is separately related to a user equipment.

16. A radio base station comprising the means of the apparatus according to claim 15.

17. An apparatus of a radio communications system, comprising means for transmitting power control information **characterized in** comprising means for decoding a group of power control information commands related to multiple user equipments.

18. A user equipment comprising the means of the apparatus according to claim 17.
